# EUROPÄISCHE PATENTSCHRIFT

(11) **EP 2 913 508 B1**
(45) Veröffentlichungstag und Bekanntmachung des Hinweises auf die Patenterteilung: **19.10.2016**
(21) Anmeldenummer: 14003609.6
(22) Anmeldetag: 23.10.2014
(51) Int. Cl.: F02F 7/00, B23P 19/04, B23P 19/10, F01M 11/00

(54) **Verfahren zum Montieren einer Ölwanne sowie Anordnung einer Ölwanne an einer durch ein Kurbelgehäuse und ein Schwungradgehäuse gebildeten Baugruppe**
Method for mounting an oil tray and assembly of an oil tray on a module comprising a crankcase and a flywheel housing
Procédé de montage d'une cuvette-carter et agencement d'une cuvette-carter sur un bloc formé par un carter de vilebrequin et un carter-volant

(30) Priorität: 26.02.2014 DE 102014002570
(43) Veröffentlichungstag der Anmeldung: 02.09.2015
(73) Patentinhaber: MAN Truck & Bus AG, 80995 München (DE)
(72) Erfinder: Fedotov, Sergiy, 90419 Nürnberg (DE)
(74) Vertreter: Liebl, Thomas

(56) Entgegenhaltungen:
- US-A- 2 002 211
- US-A- 4 770 276
- US-A1- 2010 181 146
- US-B1- 7 219 642

## Beschreibung

Die vorliegende Erfindung betrifft ein Verfahren zum Montieren einer Ölwanne an einer Baugruppe mit einem Kurbelgehäuse und einem daran befestigten Schwungradgehäuse einer Brennkraftmaschine gemäß dem Oberbegriff des Patentanspruchs 1, sowie eine Brennkraftmaschine mit einer an einer durch ein Kurbelgehäuse und ein Schwungradgehäuse gebildeten Baugruppe angeordneten Ölwanne nach dem Oberbegriff des Patentanspruchs 9. Insbesondere bei Brennkraftmaschinen massiver, selbsttragender Konstruktion, zum Beispiel für Nutzfahrzeuge, wie zum Beispiel Ackerschleppern, sind die einzelnen Bauteile, vornehmlich das Kurbelgehäuse, das Schwungradgehäuse und die Ölwanne relativ schwer und demzufolge bei der seriellen Montage, aber auch bei Reparaturen, nicht unproblematisch zu handhaben. Zum Beispiel beim Anbau der Ölwanne an die Baugruppe aus Kurbelgehäuse und Schwungradgehäuse ist auf die in zwei im Wesentlichen senkrecht zueinander ausgerichteten Trennebenen verlaufenden, aneinander angrenzenden Dichtflächen besonders zu achten (dies können Flachdichtungen, Kleberaupen, etc. sein), wobei insbesondere Beschädigungen oder Verlagerungen durch nicht paralleles oder verkantetes Fügen der Flanschverbindungen auftreten können. Zudem ist sicherzustellen, dass die aneinander angrenzenden Flanschflächen exakt in einer Flucht liegen, um Undichtigkeiten prozesssicher auszuschließen.

Aus der US 2 002 211 A ist ein Verfahren zur Montage einer Brennkraftmaschine bekannt, bei dem zunächst ein Kurbelgehäuse der Brennkraftmaschine und ein Schwungradgehäuse der Brennkraftmaschine zu einer Baugruppe verbunden werden. Anschließend wird eine Ölwanne der Brennkraftmaschine mit dieser Baugruppe verbunden. Zur Verbindung der Ölwanne mit der Baugruppe ist hier an dem Kurbelgehäuse eine das Kurbelgehäuse umrandende Führungslippe vorgesehen, auf die die Ölwanne mit einer korrespondierenden ölwannenseitigen Führungsnut aufgeschoben werden kann.

Aufgabe der Erfindung ist es, ein Verfahren und eine Brennkraftmaschine anzugeben, mittels dem bzw. mittels der ein prozesssicherer und auch für die Reparaturtechnik besonders geeigneter Zusammenbau einer Brennkraftmaschine, insbesondere unter Vermeidung von Undichtigkeiten oder Beschädigungen an den Verbindungs- bzw. Dichtflächen verwirklichbar ist.

Diese Aufgabe wird mit den Merkmalen der unabhängigen Patentansprüche gelöst. Vorteilhafte Weiterbildungen sind jeweils Gegenstand der Unteransprüche.

Gemäß den unabhängigen Ansprüchen wird ein Verfahren zum Montieren einer Ölwanne an einer durch ein Kurbelgehäuse und ein Schwungradgehäuse gebildeten Baugruppe einer Brennkraftmaschine, insbesondere einer Brennkraftmaschine für Nutzfahrzeuge, bzw. eine Brennkraftmaschine mit einer an einer durch ein Kurbelgehäuse und ein Schwungradgehäuse gebildeten Baugruppe angeordneten Ölwanne vorgeschlagen, bei dem bzw. bei der das Schwungradgehäuse eine erste, vorzugsweise einheitliche, Trennebene zum Kurbelgehäuse und zur Ölwanne aufweist, in der im montierten Zustand die jeweiligen Verbindungsflächen von Schwungradgehäuse, Kurbelgehäuse und Ölwanne in einer Anlageverbindung mittelbar (das heißt insbesondere unter Zwischenschaltung einer Dichtung, zum Beispiel als Dichtmasse oder in Form eines Dichtrings) oder unmittelbar aneinander anliegen. Das Kurbelgehäuse weist weiter eine zweite Trennebene zur Ölwanne auf, in der im montierten Zustand die Verbindungsflächen von Kurbelgehäuse und Ölwanne in einer Anlageverbindung mittelbar (das heißt insbesondere unter Zwischenschaltung einer Dichtung, zum Beispiel als Dichtmasse oder in Form eines Dichtrings) oder unmittelbar aneinander anliegen, wobei gemäß der Verfahrensführung zuerst das Kurbelgehäuse und das Schwungradgehäuse zu einer Baugruppe verbunden werden, an der anschließend die Ölwanne befestigt wird. Zudem ist wenigstens ein Führungsmittel vorgesehen, mittels dem wenigstens die Verbindungsflächen von Ölwanne und Kurbelgehäuse während der Anbindung der Ölwanne an der durch das Kurbelgehäuse und das Schwungradgehäuse gebildeten Baugruppe dergestalt zueinander ausgerichtet werden, dass diese Verbindungsflächen bei der Herstellung der Anlageverbindung zwischen Ölwanne und Kurbelgehäuse im Rahmen der Montage im Wesentlichen planparallel ausgerichtet sind. Erfindungsgemäß wird vorgeschlagen, dass das wenigstens eine Führungsmittel zwischen dem Schwungradgehäuse und der Ölwanne angeordnet ist.

Mit einer derartigen erfindungsgemäßen Lösung wird sichergestellt, dass die Ölwanne bei der Montage nicht verkantet, verdreht und/oder verkippt wird und somit ein einseitiges oder verkantetes Aufsetzen der Ölwanne mit entsprechender Beeinträchtigung der Dichtmittel (zum Beispiel Zerschmieren einer aufgebrachten Kleberaupe oder Beschädigung einer Flachdichtung, etc.) zuverlässig vermieden wird. Zudem ist die Prozesssicherheit des Montagevorgangs erhöht. Damit lässt sich auch die Montage von sehr schweren Ölwannen, wie diese beispielsweise in Nutzfahrzeugen, wie zum Beispiel Ackerschleppern, Verwendung finden, vorteilhaft erleichtern.

Die Begrifflichkeit "planparallel" soll dabei jeweils einander zugeordnete Flächen bzw. Flächenbereiche bezeichnen, die zueinander parallel ausgerichtet sind und im montierten Zustand in einer flächigen Anlageverbindung mittelbar oder unmittelbar aneinander anliegen. Diese Begrifflichkeit soll ausdrücklich auch solche Ausführungsformen umfassen, bei denen die einander zugeordneten Verbindungsflächen, zum Beispiel von Ölwanne und Kurbelgehäuse, zum Beispiel Absätze oder Stufen aufweisen und somit die Verbindungsflächen selbst keine durchgehend plane Fläche ausbilden, sofern sichergestellt ist, dass die jeweils einander zugeordneten Flächenbereiche zueinander parallel ausgerichtet sind und im montierten Zustand in einer flächigen Anlageverbindung mittelbar oder unmittelbar aneinander anliegen.

Das wenigstens eine Führungsmittel ist konkret zum Beispiel durch wenigstens ein, lediglich eine Verlagerung der Ölwanne in Montage- und Aufsetzrichtung freigebendes Führungsmittel ausgebildet, mittels dem die Ölwanne in einem abschließenden Ölwannenmontageschritt ohne Verdrehung um und/oder ohne Verkippung relativ zu einer quer zur Montage- und Aufsetzrichtung verlaufenden Ölwannenachse entlang der Trennebene in Richtung Kurbelgehäuse verlagert wird. Für eine besonders einfache Handhabung ist hierbei das wenigstens eine Führungsmittel durch wenigstens ein, lediglich eine lineare Verlagerung der Ölwanne in Montage- und Aufsetzrichtung freigebendes Linearführungsmittel ausgebildet ist.

Besonders bevorzugt ist die erfindungsgemäße Lösung zudem mit einem Aufbau, bei dem die erste Trennebene zwischen Schwungradgehäuse, Kurbelgehäuse und Ölwanne im Wesentlichen senkrecht zur zweiten Trennebene zwischen Kurbelgehäuse und Ölwanne ausgerichtet ist.

Gemäß einer besonders vorteilhaften Ausführungsform ist vorgesehen, dass in einem ersten Ölwannenmontageschritt die Ölwanne und das Schwungradgehäuse mittels des wenigstens einen Führungsmittels dergestalt miteinander verbunden werden, dass die Verbindungsflächen von Ölwanne und Schwungradgehäuse in der Trennebene mittelbar (das heißt in besondere unter Zwischenschaltung einer Dichtung) oder unmittelbar aneinander flächig zur Anlage kommen, die Verlagerung der Ölwanne relativ zum Schwungradgehäuse aber nach wie vor freigegeben ist, so dass in einem abschließenden Ölwannenmontageschritt die Ölwanne geführt mittels des wenigstens einen Führungsmittels entlang der Trennebene bzw. der Verbindungsflächen zwischen Schwungradgehäuse und Ölwanne in Richtung Kurbelgehäuse verlagert werden kann.

Das wenigstens eine Führungsmittel ist bevorzugt durch wenigstens eine Stift-Langloch-Verbindung, vorzugsweise durch mehrere Stift-Langloch-Verbindungen, zwischen dem Schwungradgehäuse und der Ölwanne gebildet, bei der ein Stift, vorzugsweise in Form einer Schraube, mit einem den Stift im Wesentlichen form- und/oder konturangepasst (bzw. einem geringen vorgegebenen Spaltmaß) und damit geführt aufnehmenden Langloch zusammenwirkt. Die wenigstens eine Stift-Langloch-Verbindung bzw. gegebenenfalls auch nur ein Teil der mehreren Stift-Langloch-Verbindungen ist vorteilhafterweise in Form einer Schraubverbindung ausgebildet, so dass diese in einer Doppelfunktion nicht nur zur Führung, sondern alternativ oder zusätzlich zu ohnehin vorzusehenden Schraubverbindungen auch zur Festlegung der Bauteile verwendet werden kann bzw. können. Besonders bevorzugt wird die den wenigstens einen Stift ausbildende wenigstens eine Schraube zunächst bei noch nicht auf das Kurbelgehäuses aufgesetzter Ölwanne mit einem definiert vorgegebenen Drehmoment angezogen, insbesondere vorfixiert, um die Ölwanne relativ zum Schwungradgehäuse und zum Kurbelgehäuse zu positionieren, wobei dann die Ölwanne anschließend, gegebenenfalls auch durch ihr Eigengewicht, in die Endmontageposition überführt wird, wobei bevorzugt vorgesehen ist, dass die wenigstens eine Schraubverbindung nach Erreichen der Endmontageposition der Ölwanne auf das Enddrehmoment angezogen wird. Durch das leichte Anziehen der wenigstens einen Schraube wird die Ölwanne bereits im Wesentlichen bündig an dem Schwungradgehäuse, insbesondere an einem die Verbindungsfläche des Schwungradgehäuses ausbildenden Schwungradgehäuseflansch, angelegt und somit eine vorteilhafte Führung entlang dieser Fläche ermöglicht.

Die Schraubverbindungen können zur Festigkeit der Baugruppe aus Kurbelgehäuse, Schwungradgehäuse und Ölwanne beitragen und demzufolge nach der Endmontage der Ölwanne auf das Enddrehmoment angezogen werden. Gegebenenfalls können somit auch bereits ohnehin vorhandene Schrauben einer Schraubverbindung zwischen dem Schwungradgehäuse und der Ölwanne verwendet werden, die entsprechend ausgeführte Langlochführungen durchgreifen, wie bereits zuvor ausgeführt.

Die Schraube der jeweiligen Stift-Langloch-Verbindung kann zum Beispiel in dem Schwungradgehäuse innerhalb von einem radial äußeren Anschlussflansch zur Ölwanne vorgesehen und in korrespondierende Gewindebohrungen der Ölwanne eingeschraubt sein.

In einer vorteilhaften Weiterbildung der Erfindung kann das wenigstens eine Führungsmittel ferner zumindest eine, die Ölwanne vor dem Einsetzen des wenigstens einen führenden Stiftes der wenigstens einen Stift-Langloch-Verbindung wirkende Einfädeleinrichtung mit einer Einfädelnut und einem Führungsstift an den einander zugeordneten Verbindungsflächen und/oder der korrespondierenden Trennebene aufweisen. Hierzu ist bevorzugt vorgesehen, dass die Einfädelnut in bzw. parallel zur Montage- und Aufsetzrichtung der Ölwanne und/oder senkrecht zur Trennebene zwischen dem Kurbelgehäuse und der Ölwanne ausgerichtet ist. Die Einfädelnut kann zum Beispiel einen Führungsabschnitt gleicher Breite und einen sich erweiternden Einfädelabschnitt aufweisen. Dies bewirkt quasi eine Vorzentrierung der Ölwanne relativ zum Kurbelgehäuse und erleichtert das anschließende Einsetzen der danach führenden Stifte bzw. Schrauben bei der Endmontage. Die Einfädelnut ist für ein vorteilhaftes und einfaches Einfädeln vorzugsweise zur zweiten Trennebene bzw. zur dortigen Verbindungsfläche hin offen ausgebildet.

Gemäß einer besonders bevorzugten konkreten Ausgestaltung sind zumindest drei Stift-Langloch-Verbindungen vorgesehen deren Verbindungsgeraden wenigstens ein Dreieck bilden. Dadurch wird bei geringem Aufwand die Ölwanne sowohl in vertikaler als auch in horizontaler Richtung exakt fixiert und in der gewünschten Weise ausgerichtet.

Gemäß einer weiteren bevorzugten Ausgestaltung ist vorgesehen, dass wenigstens zwei, Bestandteil jeweils einer Stift-Langloch-Verbindung bildende und bezogen auf die Montage- bzw. Hochachsenrichtung des Schwungradgehäuses obere und/oder in Querrichtung voneinander beabstandete schwungradseitige oder ölwannenseitige Langlöcher vorgesehen sind, in die korrespondierende ölwannenseitige bzw. schwungradseitige Stifte, insbesondere in Form von Schrauben, eingreifen. In Hochachsenrichtung darunter und beabstandet dazu ist ferner wenigstens ein, Bestandteil einer unteren Stift-Langloch-Verbindung bildendes schwungradseitiges oder ölwannenseitiges Langloch vorgesehen, in das ein korrespondierender ölwannenseitiger bzw. schwungradseitiger Stift eingreift. Das untere Langloch oder wenigstens eines der unteren Langlöcher kann somit gegebenenfalls auch durch die Einfädelnut gebildet sein.

An dieser Stelle sei ausdrücklich erwähnt, dass die Begrifflichkeit Langloch hier in einem weiten Sinne zu verstehen ist und auch Ausführungen umfassen soll, bei denen es sich nicht um ein umfassend bzw. allseitig durch eine Lochwand begrenztes Loch handelt (wenngleich dies die bevorzugte Ausführungsform eines Langlochs ist), sondern um eine nutartige offene, kanalartige Ausnehmung, also zum Beispiel eine einseitig offene Nut, handelt.

Des Weiteren kann bei einem von der Ölwanne oder von dem Kurbelgehäuse über die Trennebene vorragenden Funktionsteil, das in eine korrespondierende Aufnahme des Kurbelgehäuses oder der Ölwanne einführbar ist, der Führungsstift am Schwungradgehäuse oder an der Ölwanne so positioniert sein, dass dieser zunächst in die Einfädelnut eingreift, bevor das Funktionsteil mit der Aufnahme in Kontakt gerät. Das Funktionsteil kann beispielsweise eine Schmieröl zur Brennkraftmaschine führende Saugleitung sein, die in einen Saugkanal innerhalb des Kurbelgehäuses (gegebenenfalls unter Zwischenschaltung eines Verbindungsstutzens) mündet. Diese Maßnahme erleichtert zusätzlich die Montage der Ölwanne und schließt Beschädigungen an den Funktionsteilen zum Beispiel durch nicht exakt fluchtende Verbindungen aus.

Ein Ausführungsbeispiel der Erfindung ist im Folgenden anhand der beigefügten, schematischen Zeichnung näher erläutert.

Es zeigen:
- Fig. 1: in skizzenhafter Darstellung eine Baugruppe einer Brennkraftmaschine für Nutzkraftfahrzeuge, bestehend aus einem Kurbelgehäuse, einer Ölwanne und einem Schwungradgehäuse;
- Fig. 2: die Vormontage-Baugruppe aus Kurbelgehäuse und daran befestigtem Schwungradgehäuse in zur Montage der Ölwanne gestürzter Anordnung, mit an einem Kran in Zuführungsposition befindlicher Ölwanne;
- Fig. 3: in einem ersten Montageschritt die von oben zugeführte Ölwanne mit an die senkrechte Flanschfläche des Schwungradgehäuses angelegter Flanschfläche;
- Fig. 4: in einem zweiten Montageschritt die teilweise abgesenkte Ölwanne, die über eine Führungseinrichtung mit Schrauben, einem Führungsstift und einer Einfädelnut in horizontaler Richtung vorfixiert ist;
- Fig. 5: in einem letzten Montageschritt die auf die horizontale Flanschfläche des Kurbelgehäuses in Endposition abgesenkte und am Kurbelgehäuse und am Schwungradgehäuse befestigte Ölwanne;
- Fig. 6: eine raumbildliche Ansicht auf das am Kurbelgehäuse befestigte Schwungradgehäuse mit Darstellung der Führungseinrichtung mit Führungsstift und Einfädelnut an der Ölwanne;
- Fig. 7: in raumbildlicher Darstellung die Ölwanne mit an deren dem Schwungradgehäuse zugewandter Flanschfläche ausgebildeter Einfädelnut und mit einer Saugleitung für Schmieröl mit über die korrespondierende Flanschfläche vorragendem Rohrstutzen; und
- Fig. 8: eine stirnseitige Teilansicht des Schwungradgehäuses mit innerhalb der Flanschfläche angeordneter Schrauben mit Langlochführungen zur Vorfixierung der Ölwanne bei deren Montage.

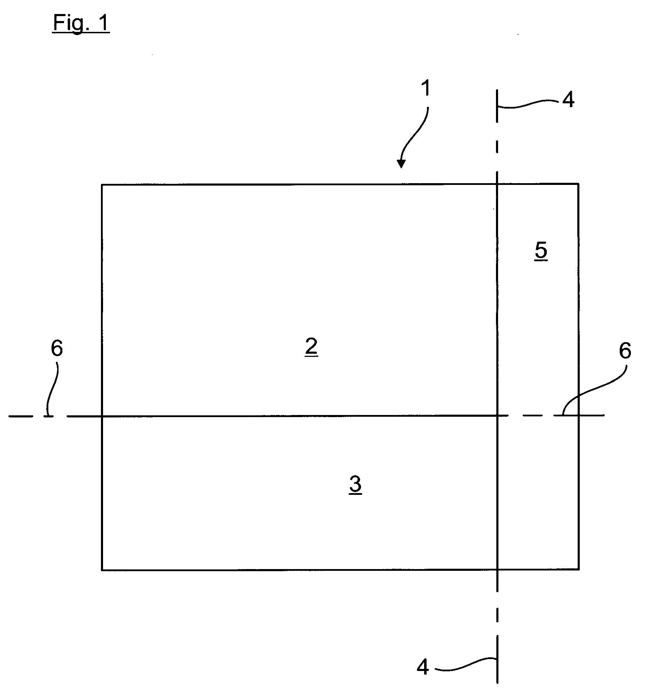

In der Fig. 1 ist grob skizziert und nur soweit für das Verständnis der vorliegenden Erfindung relevant eine Brennkraftmaschine 1 für ein Nutzfahrzeug dargestellt, die sich aus einem Kurbelgehäuse 2, einer Ölwanne 3 und einem in einer ersten, senkrechten Trennebene 4 daran angeflanschten Schwungradgehäuse 5 zusammensetzt.

Die Flanschverbindung zwischen dem Kurbelgehäuse 2 und der Ölwanne 3 bzw. deren jeweiligen Verbindungsflächen liegt in einer zweiten, horizontalen Trennebene 6.

Beim Zusammenbau der Bauteile 2, 3 und 5 sollten die einander zugewandten Verbindungs- bzw. Flanschflächen in den Trennebenen 4 und 6 in einer Flucht bzw. planparallel zueinander liegen, um Undichtigkeiten, Beschädigungen an den Dichtmitteln und/oder Bauteilverspannungen zu vermeiden.

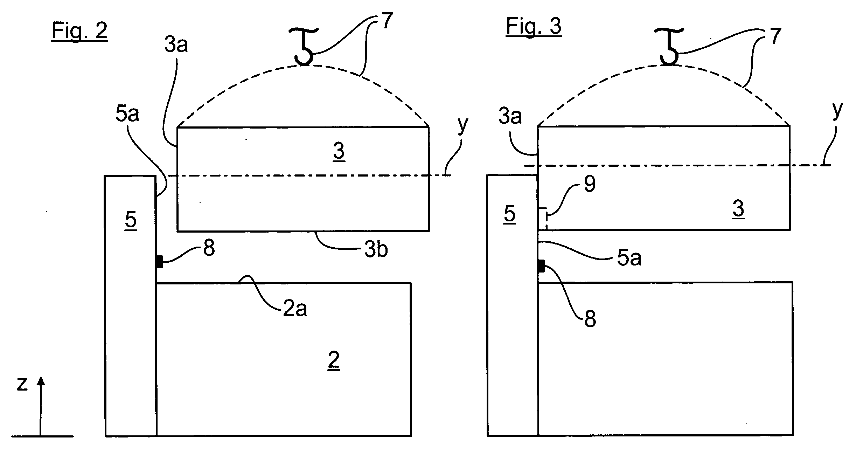

Die Fig. 2 bis 5 zeigen den erfindungsgemäßen Montageablauf, bei dem gemäß Fig. 2 der umgestürzt positionierten und vormontierten Baugruppe aus Kurbelgehäuse 2 und Schwungradgehäuse 5 die relativ massive und schwere Ölwanne 3, zum Beispiel mittels einer Hebevorrichtung 7 bzw. einem Kran, bezogen auf eine Montage- und Aufsetzrichtung z und damit bezogen auf eine Hochachsenrichtung (siehe Fig. 2), von oben der Baugruppe 2, 5 zugeführt und gemäß Fig. 3 mit deren senkrechter Verbindungsfläche bzw. deren senkrechtem Flansch 3a an der zugeordneten Verbindungsfläche bzw. dem zugeordneten Flansch 5a des frei nach oben überstehenden Schwungradgehäuses 5 zur Anlage gebracht wird.

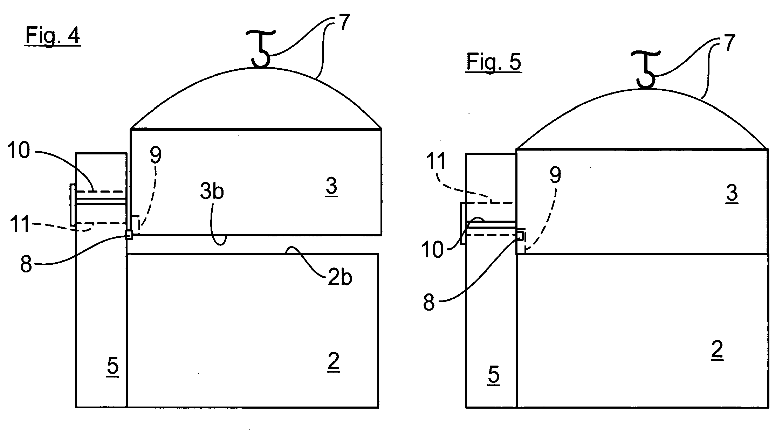

Anschließend wird, wie aus Fig. 4 ersichtlich ist, die Ölwanne 3 teilweise abgesenkt, bis ein an der Verbindungsfläche bzw. dem Flansch 5a angeordneter, vorstehender Führungsstift 8 in eine in den Flansch 3a der Ölwanne 3 eingearbeitete Einfädelnut 9 (wird noch näher beschrieben) einfährt und somit die Ölwanne 3 seitlich (senkrecht zur Zeichnungsebene) gezielt dergestalt positioniert, dass die Verbindungs- bzw. Flanschflächen 3a und 5a von Schwungradgehäuse 5 und Ölwanne 3 im Wesentlichen planparallel zueinander ausgerichtet werden.

Sodann wird die Ölwanne 3 noch in dem von dem Kurbelgehäuse 2 abgehobenen Zustand mittels mehrerer Schrauben 10 mit einem definiert geringen Anzugsmoment gegen das Schwungradgehäuse 5 vorgespannt, so dass die Verbindungs- bzw. Flanschflächen 3a und 5a von Schwungradgehäuse 5 und Ölwanne 3 in einer flächigen Anlageverbindung, vorzugsweise unter Zwischenschaltung einer Dichtung, aneinander anliegen, wobei die Ölwanne 3 in diesem vorfixierten Zustand dann mit ihrer horizontalen Verbindungsfläche bzw. mit ihrem horizontalen Flansch 3b planparallel zur Verbindungsfläche bzw. zum Flansch 2b des Kurbelgehäuses 2 ausgerichtet ist.

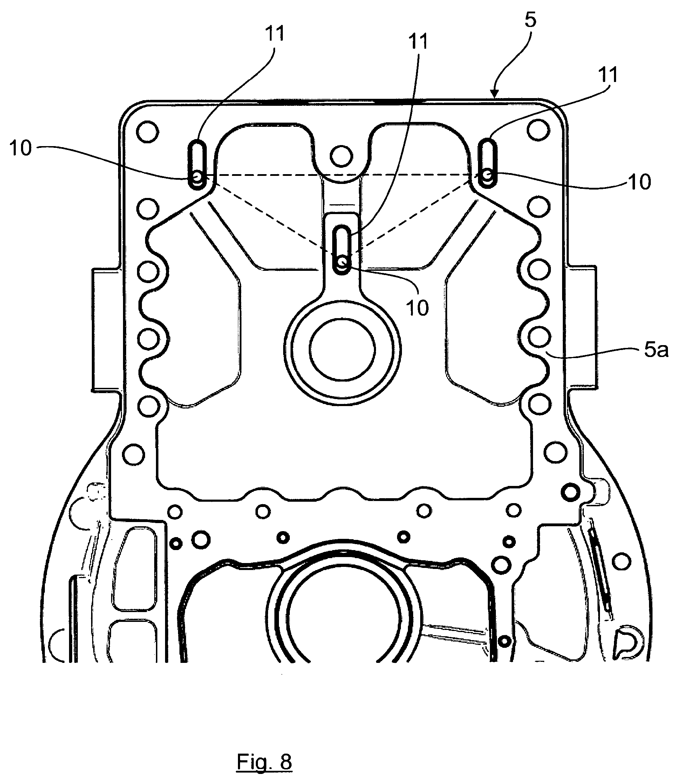

Daran anschließend kann die Ölwanne 3 (Fig. 5), gegebenenfalls auch durch ihr Eigengewicht, vollständig auf das Kurbelgehäuse 2 aufgesetzt werden, wobei sich die Schrauben 10 innerhalb von diese aufnehmenden Langlöchern 11 (Fig. 8) entsprechend relativ zum Schwungradgehäuse 5 verschieben können. Die Schrauben 10 mitsamt den zugeordneten Langlöchern 11 bilden somit hier jeweils Stift-Langloch-Verbindungen und somit Führungsmittel aus, im konkreten Beispiel Linearführungsmittel aus, die lediglich eine Linearführung in z-Richtung und damit entlang der Trennebene 4 erlauben.

Durch die mittels der Führungsmittel bewirkte exakt ausgerichtete Positionierung der Ölwanne 3 relativ zum Schwungradgehäuse 5 und dann zum Kurbelgehäuse 2 werden Beschädigungen an den Dichtmitteln (zum Beispiel eine Kleberaupe, Flachdichtung, etc.) zwischen Ölwanne 3 und Kurbelgehäuse 2 vermieden, weil die Ölwanne 3 in dem abschließenden Ölwannenmontageschritt ohne Verdrehung um und/oder ohne Verkippung relativ zu einer quer zur Montage- und Aufsetzrichtung z verlaufenden Ölwannenachse y auf das Kurbelgehäuse 2 aufgesetzt wird.

Zudem werden bei dieser Vorgehensweise gegebenenfalls Verbindungen von Funktionsteilen zwischen Ölwanne 3 und Kurbelgehäuse 2 entsprechend fluchtend ausgerichtet.

Nach dem Aufsetzen der Ölwanne 3 werden zum Beispiel durch Einsetzen weiterer Schrauben (nicht dargestellt) in die Flansche 5a, 3a bzw. 2b und 3b die Bauteile fest miteinander verbunden. Dabei werden auch die hier beispielhaft drei Schrauben 10 nunmehr mit dem vollen, konstruktiv vorgegebenen Anzugsmoment angezogen.

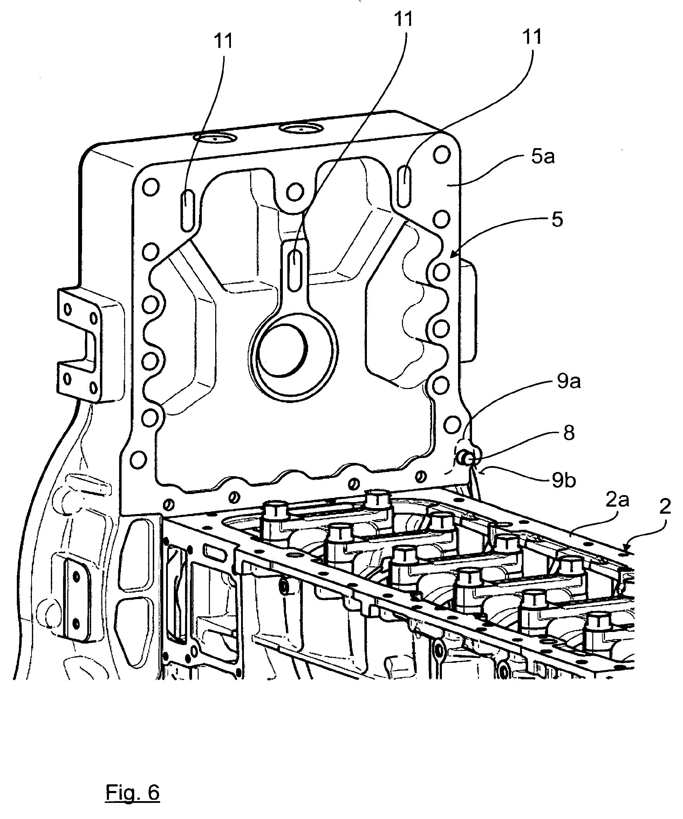

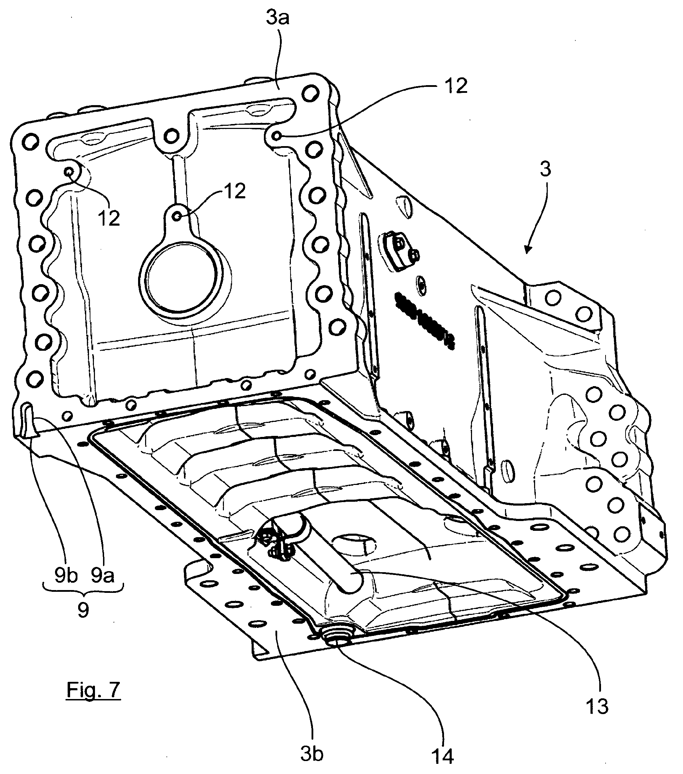

Die Fig. 6 zeigt eine Ansicht auf die senkrechte Verbindungs- bzw. Flanschfläche 5a (Trennebene 4) des überstehenden Schwungradgehäuses 5 und die horizontale Verbindungs- bzw. Flanschfläche 2b (Trennebene 6) des Kurbelgehäuses 2. Dabei ragt entsprechend der Montageposition der Fig. 4 der von der Verbindungs- bzw. Flanschfläche 5a abragende Führungsstift 8 in die Einfädelnut 9 (hier nur angedeutet, vergleiche auch Fig. 7) der Ölwanne 3 ein und fixiert diese wie angeführt in seitlicher Richtung. Auch eine kinematische Umkehrung, das heißt eine Anordnung des Führungsstiftes an der Ölwanne und eine Ausbildung der Einfädelnut an der Verbindungs- bzw. Flanschfläche 5a ist selbstverständlich möglich.

Die Einfädelnut 9 weist dazu bevorzugt einen geradlinigen Abschnitt 9a gleicher, dem Führungsstift 8 entsprechender Breite und einen sich erweiternden, zur Verbindungs- bzw. Flanschfläche 2b des Kurbelgehäuses 2 offenen Abschnitt 9b auf.

Die Fig. 8 zeigt eine stirnseitige Ansicht des Schwungradgehäuses 5 mit der umlaufenden Verbindungs- bzw. Flanschfläche 5a. Innerhalb dieser Verbindungs- bzw. Flanschfläche 5a sind hier beispielhaft drei Langlöcher 11 einer Stift-Langloch-Verbindung vorgesehen, die jeweils von einer Schraube 10 dieser Stift-Langloch-Verbindung form- und konturangepasst durchgriffen werden.

Die Langlöcher 11 sind allesamt gleich ausgerichtet und hier vorzugsweise jeweils in Aufsetz- und Montagerichtung z der Ölwanne 3 ausgerichtet bzw. anders ausgedrückt, in Hochachsenrichtung und damit senkrecht ausgerichtet.

Ferner bilden die geradlinigen Verbindungen (in gestrichelten Linien dargestellt) durch die Schrauben 10 wie ersichtlich ein Dreieck.

Die Schrauben 10 sind jeweils stirnseitig in korrespondierende Gewindebohrungen 12 der Ölwanne 3 (Fig. 7) eingeschraubt und bilden zusammen mit den zugeordneten Langlöchern 11 bei der Montage, wie vorstehend beschrieben, lediglich eine Linearführung für die Ölwanne 3 in Aufsetz- und Montagerichtung z, während sie die Ölwanne 3 in jeder anderen Richtung unverlagerbar festlegen bzw. fixieren.

Alternativ zu der eben beschriebenen Variante kann, zum Beispiel in Verbindung mit weniger schweren und massiven Ölwannen, gegebenenfalls auch auf die Einfädelnut 9 und den dieser zugeordneten Führungsstift 8 verzichtet werden.

Weiter alternativ kann gegebenenfalls auch auf eine der Langloch-SchraubVerbindungen 10, 11 der Fig. 6, zum Beispiel auf das in der Bildebene der Fig. 6 untere, mittige Langloch 11 mitsamt zugeordneter Schraube 10, verzichtet werden und dessen Funktion von der Einfädelnut 9 mitsamt zugeordnetem Führungsstift 8 übernommen werden.

Wichtig ist nämlich gemäß diesen bevorzugten Ausführungsformen nur, dass das die Verlagerung der Ölwanne 3 unterstützende Führungsmittel bevorzugt mindestens eine dreiecksförmige Dreipunklagerung bildet, damit sich die Ölwanne beim Montieren nicht verkippen bzw. verdrehen kann.

In der nicht weiter beschriebenen Ölwanne 3 ist als Funktionssteil zum Beispiel eine Saugleitung 13 angeordnet, die in üblicher Weise Schmieröl der Brennkraftmaschine 1 aus einem Ölsumpf (nicht ersichtlich) leitet und über einen über die Verbindungs- bzw. Flanschfläche 3b vorragenden Rohrstutzen 14 mit einem Saugkanal im Kurbelgehäuse 2 (nicht dargestellt) verbunden ist.

Die Führungseinrichtung bzw. der Führungsstift 8 mit der Einfädelnut 9 an der Flanschfläche 5a des Schwungradgehäuses 5 und an der Ölwanne 3 sind dabei so ausgelegt, dass bei der Montage der Ölwanne 3 erst die Ölwanne 3 vorfixiert wird, bevor der Rohrstutzen 14 mit dem korrespondierenden Saugkanal im Kurbelgehäuse 2 in Kontakt gerät. Dies stellt sicher, dass der Rohrstutzen 14 mit dem Saugkanal fluchtet und keine Beschädigungen gegebenenfalls von Dichtelementen, etc. auftreten können.

### Bezugszeichenliste

- 1: Brennkraftmaschine
- 2: Kurbelgehäuse
- 2b: horizontale Verbindungs- bzw. Flanschfläche
- 3: Ölwanne
- 3a: vertikale Verbindungs- bzw. Flanschfläche
- 3b: horizontale Verbindungs- bzw. Flanschfläche
- 4: senkrechte Trennebene
- 5: Schwungradgehäuse
- 5a: Verbindungs- bzw. Flanschfläche
- 6: horizontale Trennebene
- 7: Hebevorrichtung
- 8: Führungsstift
- 9: Einfädelnut
- 9a: geradliniger Abschnitt
- 9b: erweiterter Abschnitt
- 10: Schrauben
- 11: Langlochführungen
- 12: Gewindebohrungen
- 13: Saugleitung
- 14: Rohrstutzen

## Patentansprüche

1. Verfahren zum Montieren einer Ölwanne an einer durch ein Kurbelgehäuse und ein Schwungradgehäuse gebildeten Baugruppe einer Brennkraftmaschine, insbesondere einer Brennkraftmaschine für Nutzfahrzeuge, wobei das Schwungradgehäuse (5) eine erste, vorzugsweise einheitliche, Trennebene (4) zum Kurbelgehäuse (2) und zur Ölwanne (3) aufweist, in der im montierten Zustand die jeweiligen Verbindungsflächen von Schwungradgehäuse (5), Kurbelgehäuse (2) und Ölwanne (3) in einer Anlageverbindung mittelbar oder unmittelbar aneinander anliegen, wobei das Kurbelgehäuse (2) weiter eine zweite Trennebene (6) zur Ölwanne (3) aufweist, in der im montierten Zustand die Verbindungsflächen von Kurbelgehäuse (2) und Ölwanne (3) in einer Anlageverbindung mittelbar oder unmittelbar aneinander anliegen, und wobei zuerst das Kurbelgehäuse (2) und das Schwungradgehäuse (5) zu einer Baugruppe verbunden werden, an der anschließend die Ölwanne (3) befestigt wird, wobei wenigstens ein Führungsmittel (8, 9; 10, 11) vorgesehen ist, mittels dem wenigstens die Verbindungsflächen von Ölwanne (3) und Kurbelgehäuse (2) während der Anbindung der Ölwanne (3) an der durch das Kurbelgehäuse (2) und das Schwungradgehäuse (5) gebildeten Baugruppe dergestalt zueinander ausgerichtet werden, dass diese Verbindungsflächen bei der Herstellung der Anlageverbindung zwischen Ölwanne (3) und Kurbelgehäuse (2) im Rahmen der Montage im Wesentlichen planparallel ausgerichtet sind, **dadurch gekennzeichnet, dass** das wenigstens eine Führungsmittel (8, 9; 10, 11) zwischen dem Schwungradgehäuse (5) und der Ölwanne (3) angeordnet ist.

2. Verfahren nach Anspruch 1, **dadurch gekennzeichnet, dass** das wenigstens eine Führungsmittel durch wenigstens ein, lediglich eine Verlagerung der Ölwanne (3) in Montage- und Aufsetzrichtung (z) freigebendes Führungsmittel ausgebildet ist, mittels dem die Ölwanne (3) in einem abschließenden Ölwannenmontageschritt ohne Verdrehung um und/oder ohne Verkippung relativ zu einer quer zur Montage- und Aufsetzrichtung verlaufenden Ölwannenachse entlang der Trennebene (4) in Richtung Kurbelgehäuse (3) verlagert wird.

3. Verfahren nach Anspruch 2, **dadurch gekennzeichnet, dass** das wenigstens eine Führungsmittel durch wenigstens ein, lediglich eine lineare Verlagerung der Ölwanne (3) in Montage- und Aufsetzrichtung freigebendes Linearführungsmittel ausgebildet ist und/oder dass die erste Trennebene (4) zwischen Schwungradgehäuse (5), Kurbelgehäuse (2) und Ölwanne (3) im Wesentlichen senkrecht zur zweiten Trennebene (6) zwischen Kurbelgehäuse (2) und Ölwanne (3) ausgerichtet ist.

4. Verfahren nach einem der vorhergehenden Ansprüche, **dadurch gekennzeichnet, dass** in einem ersten Ölwannenmontageschritt die Ölwanne (3) und das Schwungradgehäuse (5) mittels des wenigstens einen Führungsmittels dergestalt miteinander verbunden werden, dass die Verbindungsflächen von Ölwanne (3) und Schwungradgehäuse (5) in der Trennebene (4) mittelbar oder unmittelbar aneinander zur Anlage kommen, die Verlagerung der Ölwanne (3) relativ zum Schwungradgehäuse (5) aber nach wie vor freigegeben ist, so dass in einem abschließenden Ölwannenmontageschritt die Ölwanne (3) geführt mittels des wenigstens einen Führungsmittels entlang der Trennebene (4) in Richtung Kurbelgehäuse (3) verlagert wird.

5. Verfahren nach einem der vorhergehenden Ansprüche, **dadurch gekennzeichnet, dass** das wenigstens eine Führungsmittel durch wenigstens eine Stift-Langloch-Verbindung, insbesondere in Form einer Schraubverbindung, zwischen dem Schwungradgehäuse (5) und der Ölwanne (3) gebildet ist, bei der ein Stift, vorzugsweise in Form einer Schraube (10, 12), mit einem den Stift im Wesentlichen form- und/oder konturangepasst aufnehmenden Langloch (11) zusammenwirkt.

6. Verfahren nach Anspruch 4 und Anspruch 5, **dadurch gekennzeichnet, dass** die den wenigstens einen Stift ausbildende wenigstens eine Schraube (10) zunächst bei noch nicht auf das Kurbelgehäuses (2) aufgesetzter Ölwanne (3) mit einem definiert vorgegebenen Drehmoment angezogen, insbesondere vorfixiert, wird, um die Ölwanne (3) relativ zum Schwungradgehäuse (5) und zum Kurbelgehäuse (2) zu positionieren, wobei dann die Ölwanne (3) anschließend, gegebenenfalls auch durch ihr Eigengewicht, in die Endmontageposition überführt wird, wobei bevorzugt vorgesehen ist, dass die wenigstens eine Schraubverbindung nach Erreichen der Endmontageposition der Ölwanne (3) auf das Enddrehmoment angezogen wird.

7. Verfahren nach Anspruch 5 oder 6, **dadurch gekennzeichnet, dass** die Führungsmittel ferner zumindest eine, die Ölwanne (3) vor dem Einsetzen des wenigstens einen führenden Stiftes wenigstens einer Stift-Langloch-Verbindung wirkende Einfädeleinrichtung mit einer Einfädelnut (9) und einem Führungsstift (8) an den einander zugeordneten Verbindungsflächen und/oder der korrespondierenden Trennebene (4) aufweist, wobei bevorzugt vorgesehen ist, dass die Einfädelnut (9) in bzw. parallel zur Montage- und Aufsetzrichtung der Ölwanne (3) und/oder senkrecht zur Trennebene (6) zwischen dem Kurbelgehäuse (2) und der Ölwanne (3) ausgerichtet ist.

8. Verfahren nach Anspruch 7, **dadurch gekennzeichnet, dass** bei einem von der Ölwanne (3) oder von dem Kurbelgehäuse (5) über die Trennebene (6) vorragenden Funktionsteil (14), das in eine korrespondierende Aufnahme des Kurbelgehäuses (2) oder der Ölwanne (3) einführbar ist, der Führungsstift (8) am Schwungradgehäuse (5) oder an der Ölwanne (3) so positioniert ist, dass zunächst der Führungsstift (8) in die Einfädelnut (9) eingreift, bevor das Funktionsteil (14) mit der Aufnahme in Kontakt gerät.

9. Brennkraftmaschine, insbesondere Brennkraftmaschine für Nutzfahrzeuge, mit einer an einer durch ein Kurbelgehäuse und ein Schwungradgehäuse gebildeten Baugruppe angeordneten Ölwanne, wobei das Schwungradgehäuse (5) eine erste, vorzugsweise einheitliche, Trennebene (4) zum Kurbelgehäuse (2) und zur Ölwanne (3) aufweist, in der im montierten Zustand die jeweiligen Verbindungsflächen von Schwungradgehäuse (5), Kurbelgehäuse (2) und Ölwanne (3) in einer Anlageverbindung mittelbar oder unmittelbar aneinander anliegen, und wobei das Kurbelgehäuse (2) weiter eine zweite Trennebene (6) zur Ölwanne (3) aufweist, in der im montierten Zustand die Verbindungsflächen von Kurbelgehäuse (2) und Ölwanne (3) in einer Anlageverbindung mittelbar oder unmittelbar aneinander anliegen, wobei wenigstens ein Führungsmittel (8, 9; 10, 11) vorgesehen ist, mittels dem wenigstens die Verbindungsflächen von Ölwanne (3) und Kurbelgehäuse (2) während der Anbindung der Ölwanne (3) an der durch das Kurbelgehäuse (2) und das Schwungradgehäuse (5) gebildeten Baugruppe dergestalt zueinander ausrichtbar sind, dass diese Verbindungsflächen bei der Herstellung der Anlageverbindung zwischen Ölwanne (3) und Kurbelgehäuse (2) im Wesentlichen planparallel ausgerichtet sind, **dadurch gekennzeichnet, dass** das wenigstens eine Führungsmittel (8, 9; 10, 11) zwischen dem Schwungradgehäuse (5) und der Ölwanne (3) angeordnet ist.

10. Brennkraftmaschine nach Anspruch 9, **dadurch gekennzeichnet, dass** das wenigstens eine Führungsmittel durch wenigstens ein, lediglich eine Verlagerung der Ölwanne (3) in Montage- und Aufsetzrichtung (z) freigebendes Führungsmittel ausgebildet ist, mittels dem die Ölwanne (3) ohne Verdrehung um und/oder ohne Verkippung relativ zu einer quer zur Montage- und Aufsetzrichtung verlaufenden Ölwannenachse entlang der Trennebene (4) in Richtung Kurbelgehäuse (3) verlagerbar ist.

11. Brennkraftmaschine nach Anspruch 10, **dadurch gekennzeichnet, dass** das wenigstens eine Führungsmittel durch wenigstens ein, lediglich eine lineare Verlagerung der Ölwanne (3) in Montage- und Aufsetzrichtung freigebendes Linearführungsmittel ausgebildet ist und/oder dass die erste Trennebene (4) zwischen Schwungradgehäuse (5), Kurbelgehäuse (2) und Ölwanne (3) im Wesentlichen senkrecht zur zweiten Trennebene (6) zwischen Kurbelgehäuse (2) und Ölwanne (3) ausgerichtet ist.

12. Brennkraftmaschine nach einem der Ansprüche 9 bis 11, **dadurch gekennzeichnet, dass** das wenigstens eine Führungsmittel durch wenigstens eine Stift-Langloch-Verbindung, insbesondere in Form einer Schraubverbindung, zwischen dem Schwungradgehäuse (5) und der Ölwanne (3) gebildet ist, bei der ein Stift, vorzugsweise in Form einer Schraube (10, 12), mit einem den Stift im Wesentlichen form- und/oder konturangepasst und damit geführt aufnehmenden Langloch (11) zusammenwirkt.

13. Brennkraftmaschine nach einem der Ansprüche 9 bis 12, **dadurch gekennzeichnet, dass**, insbesondere zur Ausbildung einer Einfädeleinrichtung und/oder einer Stift-Langlochverbindung, an den Verbindungsflächen (5a, 3a) zwischen dem Schwungradgehäuse (5) und der Ölwanne (3) ein Führungsstift (8) in die Verbindungsfläche (5a) des Schwungradgehäuses (5) oder die Verbindungsfläche (3a) der Ölwanne (3) eingesetzt ist, der mit einer korrespondierenden, zur zweiten Trennebene (6) bzw. zur dortigen Verbindungsfläche hin offenen Einfädelnut (9) an der zugeordneten Verbindungsfläche der Ölwanne (3) bzw. des Schwungradgehäuses (5) zusammenwirkt.

14. Brennkraftmaschine nach Anspruch 11 oder 12, **dadurch gekennzeichnet, dass** zumindest drei Stift-Langloch-Verbindungen vorgesehen sind, deren Verbindungsgeraden wenigstens ein Dreieck bilden, wobei bevorzugt vorgesehen ist, dass wenigstens zwei, Bestandteil jeweils einer Stift-Langloch-Verbindung bildende und bezogen auf die Montage- bzw. Hochachsenrichtung des Schwungradgehäuses (5) obere und/oder in Querrichtung voneinander beabstandete schwungradseitige oder ölwannenseitige Langlöcher (11) vorgesehen sind, in die korrespondierende ölwannenseitige bzw. schwungradseitige Stifte, insbesondere in Form von Schrauben (10), eingreifen, und dass in Hochachsenrichtung beabstandet dazu wenigstens ein, diesbezüglich unteres und Bestandteil einer unteren Stift-Langloch-Verbindung bildendes schwungradseitiges oder ölwannenseitiges Langloch (11) vorgesehen ist, in das ein korrespondierender ölwannenseitiger bzw. schwungradseitiger Stift eingreift.

15. Brennkraftmaschine nach Anspruch 12 und 13, **dadurch gekennzeichnet, dass** das untere Langloch oder wenigstens eines der unteren Langlöcher durch die Einfädelnut (9) gebildet ist.

16. Kraftfahrzeug, insbesondere Nutzfahrzeug, zur Durchführung des Verfahrens nach einem der Ansprüche 1 bis 8 und/oder mit einer Brennkraftmaschine nach einem der Ansprüche 9 bis 15.

## Claims

1. Method for mounting an oil pan on an assembly, formed by a crankcase and a flywheel housing, of an internal combustion engine, in particular of an internal combustion engine for utility vehicles, wherein the flywheel housing (5) has a first, preferably unitary, parting plane (4) with respect to the crankcase (2) and with respect to the oil pan (3), in which parting plane, in the mounted state, the respective connecting surfaces of flywheel housing (5), crankcase (2) and oil pan (3) bear indirectly or directly against one another in an abutting connection, wherein the crankcase (2) furthermore has a second parting plane (6) with respect to the oil pan (3), in which parting plane, in the mounted state, the connecting surfaces of crankcase (2) and oil pan (3) bear indirectly or directly against one another in an abutting connection, and wherein, firstly, the crankcase (2) and the flywheel housing (5) are connected to form an assembly, to which the oil pan (3) is subsequently fastened, wherein at least one guide means (8, 9; 10, 11) is provided, by means of which at least the connecting surfaces of oil pan (3) and crankcase (2) are, during the connection of the oil pan (3) to the assembly formed by the crankcase (2) and the flywheel housing (5), oriented relative to one another such that said connecting surfaces are oriented in substantially plane-parallel fashion during the production of the abutting connection between the oil pan (3) and crankcase (2) during the course of the mounting, **characterized in that** the at least one guide means (8, 9; 10, 11) is arranged between the flywheel housing (5) and the oil pan (3).

2. Method according to Claim 1, **characterized in that** the at least one guide means is formed by at least one guide means which permits only a displacement of the oil pan (3) in a mounting and setting-down direction (z) and by way of which the oil pan (3) is, in a subsequent oil pan mounting step, displaced in the direction of the crankcase (3) along the parting plane (4) without rotation about and/or tilting relative to an oil pan axis which runs transversely with respect to the mounting and setting-down direction.

3. Method according to Claim 2, **characterized in that** the at least one guide means is formed by at least one linear guide means which permits only a linear displacement of the oil pan (3) in the mounting and setting-down direction, and/or **in that** the first parting plane (4) between flywheel housing (5), crankcase (2) and oil pan (3) is oriented substantially perpendicular to the second parting plane (6) between crankcase (2) and oil pan (3).

4. Method according to one of the preceding claims, **characterized in that**, in a first oil pan mounting step, the oil pan (3) and the flywheel housing (5) are connected to one another by way of the at least one guide means such that the connecting surfaces of oil pan (3) and flywheel housing (5) come into indirect or direct contact with one another in the parting plane (4) but the displacement of the oil pan (3) relative to the flywheel housing (5) is permitted as before, such that, in a subsequent oil pan mounting step, the oil pan (3) is guided by way of the at least one guide means in the direction of the crankcase (3) along the parting plane (4).

5. Method according to one of the preceding claims, **characterized in that** the at least one guide means is formed by at least one pin-slot connection, in particular in the form of a screw connection, between the flywheel housing (5) and the oil pan (3), in the case of which a pin, preferably in the form of a screw (10, 12), interacts with a slot (11) which receives the pin in substantially form-adapted and/or contour-adapted fashion.

6. Method according to Claim 4 and Claim 5, **characterized in that** the at least one screw (10) which forms the at least one pin is, when the oil pan (3) has not yet been mounted onto the crankcase (2), initially tightened, in particular pre-fixed, with a predefined torque in order to position the oil pan (3) relative to the flywheel housing (5) and relative to the crankcase (2), wherein then, the oil pan (3) is subsequently, possibly also under the action of its own weight, moved into the final mounting position, wherein it is preferably provided that the at least one screw connection is tightened to the final torque after the oil pan (3) has reached the final mounting position.

7. Method according to Claim 5 or 6, **characterized in that** the guide means furthermore has at least one leading-in device, which acts the oil pan (3) before the insertion of the at least one guiding pin of at least one pin-slot connection and which has a leading-in groove (9) and a guide pin (8) on the mutually associated connecting surfaces and/or on the corresponding parting plane (4), wherein it is preferably provided that the leading-in groove (9) is oriented in or parallel to the mounting and setting-down direction of the oil pan (3) and/or perpendicular to the parting plane (6) between the crankcase (2) and the oil pan (3).

8. Method according to Claim 7, **characterized in that**, in the case of a functional part (14) which projects from the oil pan (3) or from the crankcase (5) beyond the parting plane (6) and which is insertable into a corresponding receptacle of the crankcase (2) or of the oil pan (3), the guide pin (8) is positioned on the flywheel housing (5) or on the oil pan (3) such that the guide pin (8) firstly engages into the leading-in groove (9) before the functional part (14) comes into contact with the receptacle.

9. Internal combustion engine, in particular internal combustion engine for utility vehicles, having an oil pan arranged on an assembly formed by a crankcase and a flywheel housing, wherein the flywheel housing (5) has a first, preferably unitary, parting plane (4) with respect to the crankcase (2) and with respect to the oil pan (3), in which parting plane, in the mounted state, the respective connecting surfaces of flywheel housing (5), crankcase (2) and oil pan (3) bear indirectly or directly against one another in an abutting connection, and wherein the crankcase (2) furthermore has a second parting plane (6) with respect to the oil pan (3), in which parting plane, in the mounted state, the connecting surfaces of crankcase (2) and oil pan (3) bear indirectly or directly against one another in an abutting connection, wherein at least one guide means (8, 9; 10, 11) is provided, by means of which at least the connecting surfaces of oil pan (3) and crankcase (2) can, during the connection of the oil pan (3) to the assembly formed by the crankcase (2) and the flywheel housing (5), be oriented relative to one another such that said connecting surfaces are oriented in substantially plane-parallel fashion during the production of the abutting connection between the oil pan (3) and crankcase (2), **characterized in that** the at least one guide means (8, 9; 10, 11) is arranged between the flywheel housing (5) and the oil pan (3).

10. Internal combustion engine according to Claim 9, **characterized in that** the at least one guide means is formed by at least one guide means which permits only a displacement of the oil pan (3) in a mounting and setting-down direction (z) and by way of which the oil pan (3) is, displaceable in the direction of the crankcase (3) along the parting plane (4) without rotation about and/or tilting relative to an oil pan axis which runs transversely with respect to the mounting and setting-down direction.

11. Internal combustion engine according to Claim 10, **characterized in that** the at least one guide means is formed by at least one linear guide means which permits only a linear displacement of the oil pan (3) in the mounting and setting-down direction, and/or **in that** the first parting plane (4) between flywheel housing (5), crankcase (2) and oil pan (3) is oriented substantially perpendicular to the second parting plane (6) between crankcase (2) and oil pan (3).

12. Internal combustion engine according to one of Claims 9 to 11, **characterized in that** the at least one guide means is formed by at least one pin-slot connection, in particular in the form of a screw connection, between the flywheel housing (5) and the oil pan (3), in the case of which a pin, preferably in the form of a screw (10, 12), interacts with a slot (11) which receives the pin in substantially form-adapted and/or contour-adapted fashion.

13. Internal combustion engine according to one of Claims 9 to 12, **characterized in that**, in particular for forming a leading-in device and/or a pin-slot connection, on the connecting surfaces (5a, 3a) between the flywheel housing (5) and the oil pan (3), a guide pin (8) is inserted into the connecting surface (5a) of the flywheel housing (5) or the connecting surface (3a) of the oil pan (3), which guide pin interacts with a corresponding leading-in groove (9) on the associated connecting surface of the oil pan (3) or of the flywheel housing (5), which leading-in groove is open toward the second parting plane (6) or toward the connecting surface there.

14. Internal combustion engine according to Claim 11 or 12, **characterized in that** at least three pin-slot connections are provided, the straight connecting lines between which form at least one triangle, wherein it is preferably provided that at least two flywheel-side or oil-pan-side slots (11) are provided which form a constituent part of in each case one pin-slot connection and which are upper slots in relation to the mounting or vertical axis direction of the flywheel housing (5) and/or are spaced apart from one another in a transverse direction and which are engaged into by corresponding oil-pan-side or flywheel-side pins, in particular in the form of screws (10), respectively, and **in that**, spaced apart therefrom in the vertical axis direction, at least one flywheel-side or oil-pan-side slot (11) is provided which is a lower slot in this regard and which forms a constituent part of a lower pin-slot connection and which is engaged into by a corresponding oil-pan-side or flywheel-side pin respectively.

15. Internal combustion engine according to Claim 12 and 13, **characterized in that** the lower slot or at least one of the lower slots is formed by the leading-in groove (9).

16. Motor vehicle, in particular utility vehicle, for carrying out the method according to one of Claims 1 to 8 and/or having an internal combustion engine according to one of Claims 9 to 15.

## Revendications

1. Procédé de montage d'un carter d'huile sur un module de moteur à combustion interne formé d'un carter de vilebrequin et d'un carter de volant d'inertie, en particulier d'un moteur à combustion interne pour véhicules utilitaires, dans lequel
le carter (5) de volant d'inertie présente un premier plan de séparation (4), de préférence unitaire, par rapport au carter de vilebrequin (2) et au carter d'huile (3),
dans lequel, en situation montée, les différentes surfaces de liaison entre le carter de volant d'inertie (5), le carter de vilebrequin (2) et le carter d'huile (3) sont situées en liaison mutuelle de position directe ou en liaison mutuelle de pose directe ou indirecte,
le carter de vilebrequin (2) présentant en outre par rapport au carter d'huile (3) un deuxième plan de séparation (6) dans lequel, en situation montée, les surfaces de liaison entre le carter de vilebrequin (2) et le carter d'huile (3) sont situées en liaison mutuelle de pose directe ou indirecte,
le carter de vilebrequin (2) et le carter de volant d'inertie (5) étant d'abord reliés pour former un module sur lequel le carter d'huile (3) est ensuite fixé,
au moins un moyen de guidage (8, 9; 10, 11) étant prévu pour aligner l'une sur l'autre au moins les surfaces de liaison du carter d'huile (3) et du carter de vilebrequin (2) pendant la liaison du carter d'huile (3) au module formé par le carter de vilebrequin (2) et le carter de volant d'inertie (5) de telle sorte qu'au cours du montage, ces surfaces de liaison soient alignées essentiellement suivant des plans parallèles lors de l'établissement de la liaison entre le carter d'huile (3) et le carter de vilebrequin (2),
**caractérisé en ce que**
le ou les moyens de guidage (8, 9; 10, 11) sont disposés entre le carter de volant d'inertie (5) et le carter d'huile (3).

2. Procédé selon la revendication 1, **caractérisé en ce que** le ou les moyens de guidage sont formés par au moins un moyen de guidage qui permet un déplacement du carter d'huile (3) uniquement dans la direction (z) de montage et de placement et au moyen duquel dans une étape finale de montage du carter d'huile, le carter d'huile (3) est déplacé dans le plan de séparation (4) et en direction du carter de vilebrequin (3) sans rotation autour d'un axe de carter d'huile s'étendant transversalement par rapport à la direction de montage et de placement, et/ou sans inclinaison par rapport à cet axe.

3. Procédé selon la revendication 2, **caractérisé en ce que** le ou les moyens de guidage sont formés par au moins un moyen de guidage linaire qui libère uniquement un déplacement linéaire du carter d'huile (3) dans la direction de montage et de placement et/ou **en ce que** le premier plan de séparation (4) entre le carter de volant d'inertie (5), le carter de vilebrequin (2) et le carter d'huile (3) est aligné essentiellement à la perpendiculaire du deuxième plan de séparation (6) entre le carter de vilebrequin (2) et le carter d'huile (3).

4. Procédé selon l'une des revendications précédentes, **caractérisé en ce que** dans une première étape de montage du carter d'huile, le carter d'huile (3) et le carter de volant d'inertie (5) sont reliés l'un à l'autre au moyen du ou des moyens de guidage de telle sorte que les surfaces de liaison entre le carter d'huile (3) et le carter de volant d'inertie (5) viennent directement ou indirectement se placer l'une contre l'autre dans le plan de séparation (4), que le déplacement du carter d'huile (3) par rapport au carter de volant d'inertie (5) soit cependant libéré comme précédemment de telle sorte que dans une étape finale de montage du carter d'huile, le carter d'huile (3) soit guidé au moyen du ou des moyens de guidage en direction du carter de vilebrequin (3) et dans le plan de séparation (4).

5. Procédé selon l'une des revendications précédentes, **caractérisé en ce que** le ou les moyens de guidage sont formés par au moins une liaison à tige et trou oblong qui présente en particulier la forme d'une liaison vissée entre le carter de volant d'inertie (5) et le carter d'huile (3), dans laquelle une tige qui présente de préférence la forme d'une vis (10, 12) coopère avec un trou oblong (11) qui reprend la tige essentiellement en correspondance géométrique et/ou de contour.

6. Procédé selon la revendication 4 et la revendication 5, **caractérisé en ce que** pour positionner le carter d'huile (3) par rapport au carter de volant d'inertie (5) et au carter de vilebrequin (2), avant que le carter d'huile (3) soit placé sur le carter de vilebrequin (2), la ou les vis (10) qui forment la ou les tiges sont serrées à un couple de rotation défini de manière prédéterminée et en particulier pré-fixé, le carter d'huile (3) étant ensuite amené dans sa position finale de montage, éventuellement par son propre poids, en serrant de préférence la ou les liaisons vissées au couple de rotation final avant que le carter d'huile (3) ait atteint sa position finale de montage.

7. Procédé selon la revendication 5 ou 6, **caractérisé en ce que** les moyens de guidage présentent en outre sur les surfaces de liaison mutuellement associées et/ou du plan de séparation (4) correspondant au moins un dispositif d'enfilage qui présente une rainure d'enfilage (9) et une tige de guidage (8) qui agit le carter d'huile (3) avant l'insertion de la ou des tiges de guidage d'au moins une liaison à tige et trou oblong, en orientant la rainure d'enfilage (9) de préférence dans la direction de montage et de placement du carter d'huile (3), parallèlement à cette dernière et/ou perpendiculairement au plan de séparation (6) entre le carter de vilebrequin (2) et le carter d'huile (3).

8. Procédé selon la revendication 7, **caractérisé en ce que** dans une partie fonctionnelle (14) qui déborde du carter d'huile (3) ou du carter de vilebrequin (5) au-delà du plan de séparation (6) et qui peut être insérée dans un logement correspondant du carter de vilebrequin (2) ou du carter d'huile (3), la tige de guidage (8) est placée sur le carter de volant d'inertie (5) ou sur le carter d'huile (3) de telle sorte que la tige de guidage (8) s'engage d'abord dans la rainure d'enfilage (9) avant que la partie fonctionnelle (14) entre en contact avec le logement.

9. Moteur à combustion interne, en particulier moteur à combustion interne pour véhicules utilitaires, présentant un carter d'huile disposé sur un module formé d'un carter de vilebrequin et d'un carter de volant d'inertie, dans lequel
le carter (5) de volant d'inertie présente un premier plan de séparation (4), de préférence unitaire, par rapport au carter de vilebrequin (2) et au carter d'huile (3),
dans lequel, en situation montée, les différentes surfaces de liaison entre le carter de volant d'inertie (5), le carter de vilebrequin (2) et le carter d'huile (3) sont situées en liaison mutuelle de position directe ou en liaison mutuelle de pose directe ou indirecte,
le carter de vilebrequin (2) présentant en outre par rapport au carter d'huile (3) un deuxième plan de séparation (6) dans lequel, en situation montée, les surfaces de liaison entre le carter de vilebrequin (2) et le carter d'huile (3) sont situées en liaison mutuelle de pose directe ou indirecte,
au moins un moyen de guidage (8, 9; 10, 11) étant prévu pour aligner l'une sur l'autre au moins les surfaces de liaison du carter d'huile (3) et du carter de vilebrequin (2) pendant la liaison du carter d'huile (3) au module formé par le carter de vilebrequin (2) et le carter de volant d'inertie (5) de telle sorte qu'au cours du montage, ces surfaces de liaison soient alignées essentiellement suivant des plans parallèles lors de l'établissement de la liaison entre le carter d'huile (3) et le carter de vilebrequin (2),
**caractérisé en ce que**
le ou les moyens de guidage (8, 9; 10, 11) sont disposés entre le carter de volant d'inertie (5) et le carter d'huile (3).

10. Moteur à combustion interne selon la revendication 9, **caractérisé en ce que** le ou les moyens de guidage sont formés par au moins un moyen de guidage qui permet un déplacement du carter d'huile (3) uniquement dans la direction (z) de montage et de placement et au moyen duquel dans une étape finale de montage du carter d'huile, le carter d'huile (3) est déplacé dans le plan de séparation (4) et en direction du carter de vilebrequin (3) sans rotation autour d'un axe de carter d'huile s'étendant transversalement par rapport à la direction de montage et de placement, et/ou sans inclinaison par rapport à cet axe.

11. Moteur à combustion interne selon la revendication 10, **caractérisé en ce que** le ou les moyens de guidage sont formés par au moins un moyen de guidage linaire qui libère uniquement un déplacement linéaire du carter d'huile (3) dans la direction de montage et de placement et/ou **en ce que** le premier plan de séparation (4) entre le carter de volant d'inertie (5), le carter de vilebrequin (2) et le carter d'huile (3) est aligné essentiellement à la perpendiculaire du deuxième plan de séparation (6) entre le carter de vilebrequin (2) et le carter d'huile (3).

12. Moteur à combustion interne selon l'une des revendications 9 à 11, **caractérisé en ce que** le ou les moyens de guidage sont formés par au moins une liaison à tige et trou oblong qui présente en particulier la forme d'une liaison vissée entre le carter de volant d'inertie (5) et le carter d'huile (3), dans laquelle une tige qui présente de préférence la forme d'une vis (10, 12) coopère avec un trou oblong (11) qui reprend la tige essentiellement en correspondance géométrique et/ou de contour.

13. Moteur à combustion interne selon l'une des revendications 9 à 12, **caractérisé en ce qu'**en particulier pour former un dispositif d'enfilage et/ou une liaison à tige et trou oblong, une tige de guidage (8) est insérée dans la surface de liaison (5a) du carter de volant d'inertie (5) ou dans la surface de liaison (3a) du carter d'huile (3), sur les surfaces de liaison (5a, 3a), qui relient le carter de volant d'inertie (5) et le carter d'huile (3), la tige de liaison coopérant avec une rainure d'enfilage (9) prévue sur la surface de liaison associée du carter d'huile (3) ou du carter de volant d'inertie (5) et ouverte par rapport au deuxième plan de séparation (6) ou à la surface de liaison formée sur ce dernier.

14. Moteur à combustion interne selon la revendication 11 ou 12, **caractérisé en ce qu'**au moins trois liaisons à tige et trou oblong sont prévues, dont les droites de liaison forment au moins un triangle, et **en ce qu'**il est en particulier prévu qu'au moins deux trous oblongs (11), qui forment chacun une partie d'une liaison à tige et trou oblong et située dans le haut par rapport à la direction de montage ou d'axe supérieur du carter de volant d'inertie (5) et/ou à distance l'un de l'autre dans la direction transversale, du côté du volant d'inertie ou du côté du carter d'huile, des tiges qui présentent en particulier la forme de vis (10), qui y correspondent sur le carter d'huile ou le carter de volant d'inertie, s'y engageant, et **en ce qu'**à distance de la direction de l'essieu supérieur, au moins un trou oblong (11) côté volant d'inertie ou côté carter d'huile, situé dans le bas et formant un composant d'une liaison basse à tige et trou oblong est prévu, dans lequel s'engage une tige correspondante du carter d'huile ou du carter de volant d'inertie.

15. Moteur à combustion interne selon la revendication 12 ou 13, **caractérisé en ce que** le trou oblong inférieur ou au moins l'un des trous oblongs inférieurs sont formés par la rainure d'enfilage (9).

16. Véhicule automobile, en particulier véhicule utilitaire, prévu pour mettre en oeuvre le procédé selon l'une des revendications 1 à 8 et/ou présentant un moteur à combustion interne selon l'une des revendications 9 à 15.
